(19) Europäisches Patentamt
European Patent Office
Office européen des brevets

(11) Publication number: 0 491 986 A1

# (12) EUROPEAN PATENT APPLICATION

(21) Application number: **90125465.6**

(22) Date of filing: **24.12.90**

(51) Int. Cl.5: **C08K 5/523**, C08K 5/5333, C08L 67/02

(43) Date of publication of application: **01.07.92 Bulletin 92/27**

(84) Designated Contracting States: **DE ES FR GB IT NL**

(71) Applicant: **GENERAL ELECTRIC COMPANY**
**1 River Road**
**Schenectady, N.Y. 12151(US)**

(72) Inventor: **Tabankia, Farshid, General Electric Plastics B.V.**
**P.O. Box 117**
**NL-4600 AC Bergen op Zoom(NL)**
Inventor: **de Wit, Gerrit, General Electric Plastics B.V.**
**P.O. Box 117**
**NL-4600 AC Bergen op Zoom(NL)**

(74) Representative: **Schüler, Horst, Dr. et al**
**General Electric Praunheimer Landstrasse 50**
**W-6000 Frankfurt 90(DE)**

(54) **Flame retardant polymer compositions containing polybutylene terephthalate and oligomeric phosphoric or phosphonic acid esters.**

(57) The invention relates to a polymer composition, containing (1) a polymer component chosen from the group consisting of polybutylene terephtalate and combinations of polybutylene terephtalate with other polymers; (2) at least one flame retardant agent, wherein the flame retardant agent has the formula

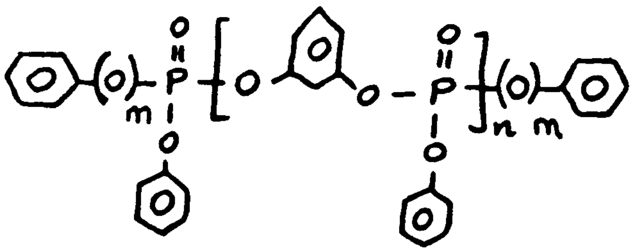

wherein n has an average value of 0.5-4, m is 0 or 1, and the phenyl nuclei may be substituted with lower alkyl or alkyl groups.

EP 0 491 986 A1

Polymer composition containing polybutylene terephtalate, a flame retardant agent, and, if desired, further components.

Organic polymers are normally flammable materials, and accordingly it is normal to include flame retardant agents in polymer compositions, the desired degree of flame retardancy being dependent on the ultimate use of the composition. Various flame retardants are known, among which in the first place halogen compounds and phosphorus compounds. Often synergists are also used.

NL-A-8802346 discusses several references relating to the use of phosphorus compounds as flame retardants for polycarbonate compositions which also may contain styrene polymers. The invention of this document is the use of a poly(aryl-arylene phosphate) or poly(aryl-arylene phosphonate) as flameretardant in a polymer composition of aromatic polycarbonate and styrene-containing copolymer and/or graft copolymer.

In the case of polybutylene terephtalate (PBT), only halogenated flame retardant agents have been used in commercial PBT products. The demand for a non-halogenated flame retardant PBT material is increasing; on the one hand it is increasing for specific applications, like wires and cables because of the fact that halogens have a deteriorating effect on some characteristic properties of PBT, and on the other hand, because of environmental reasons non-halogenated materials generally are preferred.

In the past, several attempts to make PBT flame retardant with the aid of halogen-free flame retardant agents, like aluminum tri(methyl- phosphonate); a corresponding lithium compound or some silicones have been unsuccessful.

It is to be noted that the problem of flame retardancy in PBT is difficult in comparison with other engineering thermoplastics like polyphenylene ether, polycarbonate etc., due to its low oxygen index (oxygen index = 16) and very low amount of char formed during its combustion (about 3 % only of the PBT).

Surprisingly, it has now been found that aromatic phosphate and phosphonate compounds, derived from resorcinol, are highly efficient flame retardant agents for PBT-comtaining polymer compositions.

Accordingly, a polymer composition is provided which contains

(1) polybutylene terephtalate, if desired in combination with other polymers;

(2) a flame retardant agent and

(3) if desired further usual additives, wherein the flame retardant agent has the formula

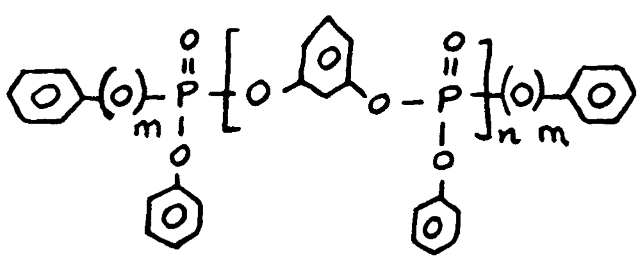

wherein n has an average value of 0.5-4, m is 0 or 1, and the phenyl nuclei may be sub-stituted with lower alkyl or alkoxy groups. The polybutylene terephtalate can be used as sole polymer in the composition but more preferably combinations of PBT with other polymers are used, and for practical purposes combinations of PBT with polycarbonate (PC) and combinations of PBT and polyetherimide (PEI) are particularly preferred. The weight ratio between PBT and PC or PEI respectively may be anything from 30/70 upwards.

The flame retardant agents used according to the present invention are compounds which are known per se, and some of them are commercially available. If n in the above formula is zero, the formula would represent triphenyl phosphate. However, in order to be sufficiently effective, the flame retardant should contain a certain minimum amount of resorcinyl compound and for this reason n has a minimum value of 0.5. The products wherein n has an average value of more than 1 are also effective flame retardants, but when n has an average value of more than 4, some of the phsysical properties of the composition will tend to deteriorate so that the product no longer would be acceptable.

The main component of the flame retardant usually is the compound, wherein n is 1, i.e. tetraphenyl-resorcinyl-diphosphate, wherein the phenyl groups may be substituted as mentioned hereinabove. It should be remarked that a corresponding hydroquinone compound was tested, and appeared ineffective as flame retardant agent in the present systems. A test with triphenylphosphine oxide also was unsuccessful; apparently, phenyl groups are not as efficient for the flame retardant activity as phenoxy groups.

The flame retardant agent of the present invention should be used in flame retardant amounts.

Normally, these are amounts of 3 to 30 % by weight of the entire composition. The exact amount will depend on the desired flame retardant properties and on the nature and amounts of other components present in the composition besides the PBT and the present flame retardant agent.

As examples of usual additives which may also be present in the composition of the invention can be mentioned fillers, reinforcing fibers, stabilizers, dyes and pigments, plasticizers, mold release agents, lubricants and antistatic agents, as well as further flame retardant agents.

As examples of further flame retardant agents can be mentioned flame-retardant salts, especially sulphonate salts, which often are used in polycarbonate compositions and which can also be used in the present case, if the polymer component contains a considerable amount of polycarbonate. Furthermore perfluoro alkane polymers; phosphorous acid or phosphites; synergistic metal compounds, and of course also chlorine and/or bromine containing flame retardant compounds, although these halogen compounds in many cases are less preferred because of their environmental effects and their possible implications for the other properties of the polymer composition. However, in small amounts these halogen-containing flame retardants can be tolerated.

The present invention is further elucidated with the aid of the following examples, which, however, should not be construed to limit the invention in any way.

Example 1

The following materials were used: polybutylene terephtalate (PBT) having an intrinsic viscosity (IV) of 1.2, measured in a 60/40 phenol/tetrachloro ethane solution at 25 ° C; polycarbonate (PC) derived from bisphenol A and phosgene having an intrinsic viscosity of 57.5, measured in a methylene chloride solution at 25 ° C; hindered phenol as anti-oxidant. Furthermore, a flame-retardant agent was used of the formula

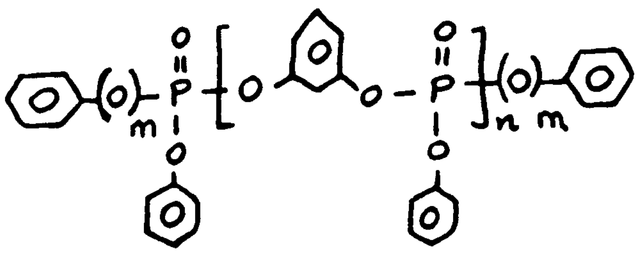

wherein n has an average value of 1.3 and M = 1. The main component thereof is resorcinol diphosphate, and therefore this agent is abbreviated hereinafter as RDP, it being understood that it is in fact a mixture of compounds of the above formula with various values of n.

All the materials were compounded on a twin screw extruder under the standard extrusion conditions for PBT.

Four compositions were prepared and tested for their burning behaviour. The UL-94 rating was determined according to Underwriters Laboratory procedure. The Glow Wire Test (IEC 695-2-1) has been abbreviated as GWT. The compositions and the obtained results are indicated in the following Table 1

| Components | COMPOSITION I | II | III | IV |
|---|---|---|---|---|
| PBT | 89.85 | 79.85 | 74.85 | 69.85 |
| PC | 10 | 10 | 15 | 15 |
| hindered phenol | 0.15 | 0.15 | 0.15 | 0.15 |
| TRD | - | 10 | 10 | 15 |
| **Properties** | | | | |
| UL-94 (1.6 mm) | V2 | V2 | V2 | V2 |
| Flame out time (sec) | >60 | 4 | 2 | 3 |
| Dripping | + | + | + | + |
| GWT (960°C) | Fail | Fail | Fail | Pass |

As appears from the above Table, the flame out time is dramatically reduced in the present compositions, and is less than 10 sec, which is in the VO rating range. In spite thereof all the materials are rated V2, since dripping occurs in the early moments of burning. However, dripping can be dealt with by minor changes in the other components, and the purpose of the present example was only to show the excellent flame retardant effect of the present compositions. It should also be noted that by increasing the amount of TRD (composition IV), the material even passes the GWT test at 960° C.

## Example 2

In order to improve the UL-ratings, variations in the compositions of example 1 were tested, and in this case a PC of higher IV (64) was used. The tested compositions and properties are indicated in Table II.

| Composition | Comparative | Example 2 |
|---|---|---|
| PBT | 59.8 | 44.3 |
| PC | 40 | 40 |
| TRD | - | 15 |
| Hindered phenol | 0.15 | 0.15 |
| 45 % H3PO3 | 0.06 | 0.06 |
| Teflon Premix | - | 0.5 |
| **Properties** | | |
| MVI1) (250°C/21.6N) | 8.8 | 20 |
| UL-94 (1,6 mm) | V2 | V0 |
| Flame Out Time (sec.) | >60 | 2 |
| Oxygen Index (%) | 19 | 36 |
| Glow Wire Test (960°C) | fail | pass |
| CTI2) (KC), volts | 600 | 600 |

1) Melt Viscosity Index

It follows from the above results that selection of a suitable stabilization package and of a higher molecular PC allows the attaining of an UL rating of V0. This is attained with maintenance of the high CTI value.

Example 3

Tetraxylyl-resorcinyl diphosphate (RDPX) of the formula:

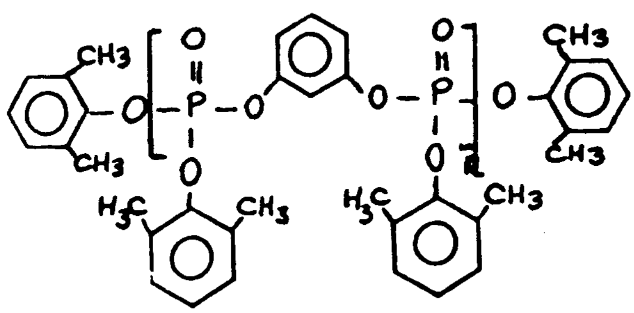

wherein n has an average value of 1, was examined as an alternative for RDP. The PBT in this example was the same as in examples 1 and 2 and the PC was the same as in example 2. Not only the flame retardant properties, but also the most important physical properties of the compositions were tested. The results were presented hereinafter in Table 3.

| Composition | I | II |
|---|---|---|
| PBT | 44.35 | 43.85 |
| PC | 40 | 40 |
| Irganox 1076 | 0.15 | 0.15 |
| Drip inhibitor[1)] | 0.5 | 1 |
| RDP | 15 | - |
| RDPX | - | 15 |

1) 20 % polytetrafluoroethylene in polycarbonate (IV=55)

| Properties | I | II | UNIT |
|---|---|---|---|
| MVI (250 C, 21.6N) | 20 | 10 | cc/10' |
| UL-94 (1.6 mm) | V0 | V0 | - |
| Oxygen Index | 36 | 36 | % |
| Glow Wire Test | 960 | 960 | °C |
| Vicat B/120 °C[1)] | 80.6 | 99 | °C |
| Flex. Strength | 89.4 | 90 | MPa |
| Flex. Modulus | 2120 | 2700 | MPa |
| Izod Notched, RT | 29 | 26 | J/m |
| Tensile Strength | 63 | 51 | MPa |
| Elongation at break | 25 | 97 | % |

1) ASTM-D1525

As appears from this Table, both flame retardants have the desired excellent flame retarding effect, and - as expected - offer the possibility of producing compositions of varying physical properties. Thus, composition II shows a considerable increase in heat distortion temperature and stiffness.

Example 4

In this example compositions containing blends of PBT and poly(etherimide) (PEI) in various weight ratios were tested. Such blends are known from U.S.-A-4,141,927. The PBT used was the same as used in the previous examples and a PEI was used having a IV of 1,1 The compositions and test results are given hereinbelow in Table 4.

Table 4

| Composition | 1 | 2 | 3 | 4 | 5 | 6 |
|---|---|---|---|---|---|---|
| PBT | 69.7 | 59.45 | 49.45 | 47 | 45.8 | 44.5 |
| PEI | 30 | 40 | 50 | 47.5 | 46.2 | 45 |
| Irganox | 0.3 | 0.3 | 0.3 | 0.3 | 0.3 | 0.3 |
| Teflon Premix | - | 0.25 | 0.25 | 0.25 | 0.25 | 0.25 |
| RDP | - | - | - | 5 | 7.5 | 10 |
| Properties | | | | | | |
| UL-94 (3.2mm) | V2 | V2 | V2 | V2 | V0 | V0 |
| Flame Out Time (sec) | 60 | 58 | 32 | 5.2 | 2.8 | 2 |
| Dripping | yes | yes | yes | yes | no | no |
| Glow Wire Test (960°C) | fail | fail | pass | pass | pass | pass |

It should be remarked that PBE and PEI are fully miscible, when they are used in approximately the same amounts, as is the case in compositions 3-6. Such a blend exhibits one Tg at 132° C and as reduced flame out time in the flammability rest, compared to straight PBT. Due to this a V0 rating can already be obtained with lower amounts of RDP.
All patent (applications) mentioned herein are herewith incorporated by reference.

## Claims

1. Polymer composition, containing (1) a polymer component chosen from the group consisting of polybutylene terephtalate and combinations of polybutylene terephtalate with other polymers; (2) at least one flame retardant agent, wherein the flame retardant agent has the formula

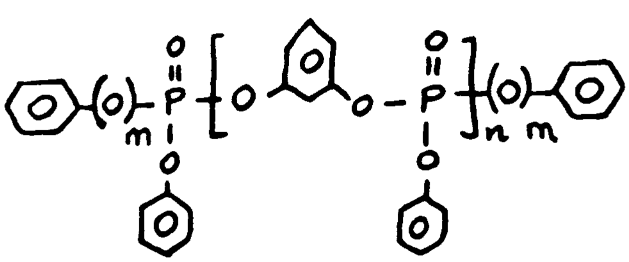

wherein n has an average value of 0.5-4, m is 0 or 1, and the phenyl nuclei may be substituted with lower alkyl or alkoxy groups.

2. Polymer composition according to claim 1, further containing (3) at least one usual additive for the polymer component.

3. Polymer composition according to claim 1 or 2, wherein component (1) is a combination of polybutylene-terephtalate and polycarbonate.

4. Polymer composition according to claims 1 or 2, wherein component (1) is a combination of polybutylene terephtalate and poly(etherimide).

5. Polymer composition according to claims 1-4, wherein n in the formula has a value of 0.8-2 and the phenyl nuclei are unsubstituted.

6. Polymer composition according to any of claims 1-4, wherein n in the formula has a value of 0.8-2 and the phenyl nuclei each of two metal substituents.

7. Polymer composition according to any of claims 1-6, wherein component (2) constitutes 3-20 weight % of the entire composition.

8. Polymer composition according to claim 7, wherein component (2) constitutes 5-15 % of the composition.

European Patent Office

# EUROPEAN SEARCH REPORT

Application Number

EP 90 12 5465

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 133 641 (GENERAL ELECTRIC) * Claims 1,3,11,12,18,21,22,25,29; page 7, line 19 - page 8, line 20; page 10, line 30 - page 11, line 15; examples 11-15 * --- | 1-3,5-8 | C 08 K 5/523<br>C 08 K 5/5333<br>C 08 L 67/02 |
| X | CHEMICAL ABSTRACTS, vol. 101, no. 6, 1984, page 62, abstract no. 39746b, Columbus, Ohio, US; & JP-A-59 059 916 (KURARAY CO.) 05-04-1984 * Abstract; registry numbers in index-terms from CAS-online * --- | 1,5 | |
| X | US-A-3 987 008 (R.W. STACKMAN) * Claims 1-4; column 2, line 64 - column 3, line 41; examples 10-12 * --- | 1,7,8 | |
| X | GB-A-1 405 983 (MITSUBISHI RAYON) * Claims 1-3,9,15,18; page 4, lines 6-27 * --- | 1,2,6,7 | |
| X | US-A-4 203 888 (R.B. RASHBROOK) * Whole document * --- | 1,5-8 | TECHNICAL FIELDS SEARCHED (Int. Cl.5) |
| X | FR-A-2 338 284 (I.C.I.) * Claims 1-3,7-9; page 2, lines 30-35; examples 4,8 * --- | 1,6-8 | C 08 K<br>C 08 L |
| X | EP-A-0 386 916 (POLYPLASTICS CO., LTD) * Claims 1-10; page 5, lines 31-44 * ----- | 1-8 | |

The present search report has been drawn up for all claims

| Place of search | Date of completion of the search | Examiner |
|---|---|---|
| THE HAGUE | 26-08-1991 | KRISCHE D.H.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)